# EUROPÄISCHE PATENTSCHRIFT

(11) **EP 0 422 359 B1**
(45) Veröffentlichungstag und Bekanntmachung des Hinweises auf die Patenterteilung: **15.06.1994**
(21) Anmeldenummer: 90115723.0
(22) Anmeldetag: 16.08.1990
(51) Int. Cl.: B60C 25/138

(54) **Montagevorrichtung, insbesondere Kegelrolle, bei einer Montagevorrichtung für einen Reifen**
Mounting device, in particular conical roller in a mounting device for a tyre
Dispositif de montage, en particulier rouleau conique dans un dispositif de montage de pneumatique

(30) Priorität: 12.10.1989 DE 8912180 U
(43) Veröffentlichungstag der Anmeldung: 17.04.1991
(73) Patentinhaber: WEILNHAMMER MASCHINENBAU GMBH, D-84405 Dorfen (DE)
(72) Erfinder: Weilnhammer, August, D-8250 Dorfen (DE)
(74) Vertreter: Schieschke, Klaus, Dipl.-Ing.

(56) Entgegenhaltungen:
- EP-A- 0 154 715
- EP-A- 0 338 642
- DE-A- 3 411 433
- DE-A- 3 438 615
- DE-A- 3 727 817

## Beschreibung

Die Erfindung bezieht sich auf eine Montagerolle, insbesondere Kegelrolle, bei einer Montagevorrichtung für einen Reifen, dessen Reifenwulste das Felgenhorn einer Felge radial innen umschlingen, mit einer Felgenspanneinrichtung, einem Montagearm und einer, der Kegelrolle vorgeordneten, den jeweiligen Reifenwulst beaufschlagenden Vorlaufrolle, wobei die Kegelrolle und die Vorlaufrolle am Montagearm über einen Schlitten gegenüber dem Reifenwulst verstellbar sind.

Als Stand der Technik ist bereits eine derartige Montagevorrichtung bekannt (DE-A-37 27 817), bei welcher der Kegelrolle in Laufrichtung eine den jeweiligen Reifenwulst beaufschlagende, zylindrische Rolle als Vorlaufrolle winkelversetzt vorgeordnet ist. Diese Montagevorrichtung wird speziell bei einem Fahrzeugrad einsetzt, bei welchem die Reifenwulst nicht - wie bisher - innen am Felgenhorn liegt, sondern außen herum greift. Zur Montage sind die Kegelrolle und die zylindrische Rolle auf einem höhen- und seitenverstellbaren Montagewerkzeug angeordnet, wobei zwischen der auf einer Spanneinrichtung befestigten Felge und dem Montagewerkzeug während der Reifenmontage eine Relativbewegung stattfindet.

Bei dieser bekannten Konstruktion kann die Montagerolle einem Schlupf unterliegen, so daß hierdurch eine Erschwernis der Reifenmontage eintritt.

Zum Stand der Technik zählt darüberhinaus eine weitere Montagevorrichtung (EP-A-0 338 642), bei welcher drei Rollen Anwendung finden, nämlich eine Druckrolle, eine Montagerolle und eine Arretierrolle. Die Vorrichtung ist so konzipiert, daß eine Bewegung in zwei Drehrichtungen möglich ist. Unabhängig davon kann die Druckrolle in einer Laufrichtung gesperrt sein. Bei dieser bekannten Vorrichtung weist die Montagerolle eine speziell gestalteten Außenumfang auf, um den Reifenwulst in das Felgenhorn einzudrücken. Neben baulichem Aufwand ist damit bei dieser bekannten Konstruktion ebenfalls nicht gewährleistet, daß die Montagerolle schlupffrei läuft.

Demgegenüber besteht die Aufgabe der vorliegenden Erfindung darin, eine Konstruktion der eingangs genannten Art zu schaffen, welche bei einfachem Aufbau eine Verbesserung in der Montagewirkung der Kegelrolle erbringt.

Diese Aufgabe wird erfindungsgemäß dadurch gelöst, daß die Kegelrolle über eine Sperrvorrichtung in der der Montagerichtung entgegengesetzten Richtung gesperrt ist, daß die Sperrvorrichtung als Freilauf ausgebildet ist, daß der Freilauf zwischen einer Lagerstelle der Kegelrolle und einem Absatz einer die Kegelrolle lagernden Achse angeordnet ist, und daß die Kegelrolle eine weitere Lagerstelle zur Aufnahme eines Kugellagers aufweist, welche dem Freilauf auf der Achse vorgeordnet ist. Hierdurch ergibt sich der Vorteil, daß sich die als Montagerolle dienende Kegelrolle nur in einer Richtung drehen kann, so daß unerwünschter Schlupf während des Montagevorganges vermieden wird, wobei die gesamte Anordnung infolge Verwendung an sich bekannter Elemente einfach aufgebaut ist.

Die Erfindung wird nachfolgend anhand eines in der Zeichnung dargestellten Ausführungsbeispiels näher beschrieben. In der Zeichnung zeigen:
- Fig. 1: Eine schematische Seitenansicht einer Montagevorrichtung mit erfindungsgemäß gelagerter Kegelrolle;
- Fig. 2: eine Detailansicht der Kegelrolle und der Spanneinrichtung im Schnitt;
- Fig. 3: einen Schnitt durch den an sich bekannten Freilauf, teils gebrochen.

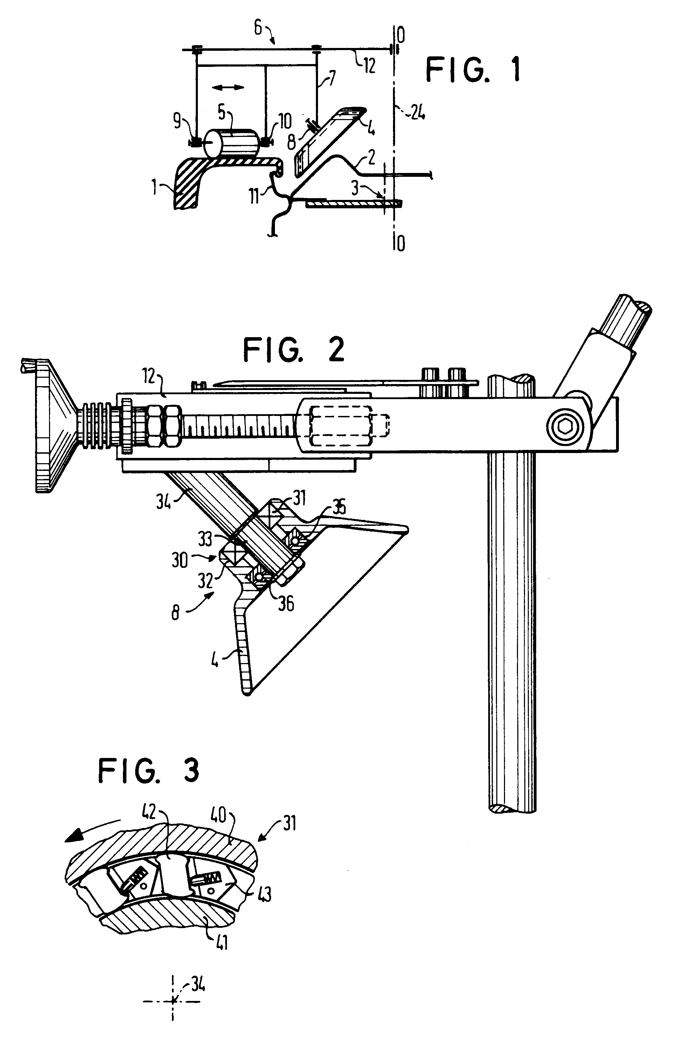

In Fig. 1 sind schematisch die wichtigsten Teile einer Montagevorrichtung dargestellt. Hierbei besteht das Ziel darin, einen Reifen 1 mit einer Felge 2 zu verbinden, wobei die Reifenwulste des Reifens mit innenliegendem Stahldrahtring über ein entsprechendes Felgenhorn 11 der Felge geführt werden müssen. Hierzu wird zunächst der Reifen 1 mit der eingestückten Felge 2 auf eine schematisch dargestellte Felgenspanneinrichtung 3 der Montagevorrichtung aufgelegt und festgespannt.

Das Montagewerkzeug dieser Montagevorrichtung weist eine als Kegelrolle 4 ausgebildete Montagerolle auf, welcher in Laufrichtung eine den jeweiligen Reifenwulst beaufschlagende zylindrische Vorlaufrolle 5 winkelversetzt vorgeordnet ist. Hierbei sind die Kegelrolle 4 und die zylindrische Vorlaufrolle 5 auf einem Schlitten 7 angeordnet und in den Lagern 8 bzw. 9 und 10 des Schlittens 7 drehbar gelagert.

Der Schlitten 7 ist über zwei Führungen auf einem Montagearm 12 des Montagewerkzeuges 6 angeordnet, wobei der Montagearm 12 höhenverstellbar gegenüber der Achse O-O, welche beispielsweise als Positionierachse 24 definiert ist und den Mittelpunkt der Felge 2 durchdringt.

Aus Fig. 2 ist ersichtlich, daß die Kegelrolle 4 über eine Sperrvorrichtung 30 in der der Montagerichtung entgegengesetzten Richtung gesperrt ist. Hierbei ist die Sperrvorrichtung 30 als an sich bekannter Freilauf 31 ausgebildet.

Dieser Freilauf 31 ist zwischen einer Lagerstelle 32 der Kegelrolle 4 und einem Absatz 33 einer die Kegelrolle 4 lagernden Achse 34 angeordnet. Weiterhin weist die Kegelrolle 4 eine weitere Lagerstelle 35 zur Aufnahme eines an sich bekannten Kugellagers, beispielsweise eines Rillenkugellagers auf. Aus Fig. 2 ist darüberhinaus ersichtlich, daß das Kugellager 36 dem Freilauf 31 auf der Achse 34 vorgeordnet ist.

Fig. 3 zeigt die an sich bekannte Darstellung eines Freilaufes mit einem Außenring 40 und einem Innenring 41, zwischen welchen sich Klemmteile 42 und Verriegelungselemente 43 mit federbeaufschlagten Bolzen befindet. Bewegt sich der Außenring 40 im Gegenuhrzeigersinn in Pfeilrichtung, so kann sich die Kegelrolle 4 drehen. Erfolgt eine mögliche Umkehr des Drehsinns, d.h. die Drehrichtung im Uhrzeigersinn, so wird über das Zusammenwirken der Verriegelungselemente 43 mit den Klemmteilen 42 eine Klemmung herbeigeführt, so daß sich die Kegelrolle 4 nicht mehr drehen kann. Damit ist die Kegelrolle 4 vorteilhafterweise in der der Montagerichtung entgegengesetzten Richtung gesperrt, so daß sich insgesamt hieraus eine Verbesserung und Erleichterung der Montage eines Reifens 1 auf einer Felge 2 ergibt.

## Patentansprüche

1. Montagerolle, insbesondere Kegelrolle (4), bei einer Montagevorrichtung für einen Reifen (1), dessen Reifenwulste das Felgenhorn (11) einer Felge (2) radial innen umschlingen, mit einer Felgenspanneinrichtung (3), einem Montagearm (12) und einer, der Kegelrolle (4) vorgeordneten, den jeweiligen Reifenwulst beaufschlagenden Vorlaufrolle (5), wobei die Kegelrolle (4) und die Vorlaufrolle (5) am Montagearm (12) über einen Schlitten (7) gegenüber dem Reifenwulst verstellbar sind,
dadurch gekennzeichnet,
daß die Kegelrolle (4) über eine Sperrvorrichtung (30) in der der Montagerichtung entgegengesetzten Richtung gesperrt ist,
daß die Sperrvorrichtung (30) als Freilauf (31) ausgebildet ist,
daß der Freilauf (31) zwischen einer Lagerstelle (32) der Kegelrolle (4) und einem Absatz (33) einer die Kegelrolle (4) lagernden Achse (34) angeordnet ist und
daß die Kegelrolle (4) eine weitere Lagerstelle (35) zur Aufnahme eines Kugellagers (36) aufweist, welche dem Freilauf (31) auf der Achse (34) vorgeordnet ist.

## Claims

1. A fitting roller, particularly a bevelled roller (4), in a fitting device for a tyre (1), the tyre beads of which wrap radially inwards round the rim bulge (11) of a rim (2), with a rim clamping device (3), a fitting arm (12) and a preliminary roller (5) disposed in front of the bevelled roller (4) and acting on the respective tyre bead, wherein the bevelled roller (4) and the preliminary roller (5) can be adjusted on the fitting arm (12) in relation to the tyre bead via a slide (7),
characterised in that
in the direction opposite to the direction of fitting, the bevelled roller (4) is locked via a locking device (30),
that the locking device (30) is constructed as a freewheel (31),
that the freewheel (31) is disposed between a bearing (32) of the bevelled roller (4) and a projection (33) on a shaft (34) which supports the bevelled roller (4), and
that the bevelled roller (4) has an additional bearing (35) for receiving a ball bearing (36) which is disposed in front of the freewheel (31) on the shaft (34).

## Revendications

1. Rouleau de montage, notamment rouleau conique (4) pour appareil de montage pour un pneumatique (1) dont les talons s'emboîtent radialement à l'intérieur sur le rebord (11) d'une jante (2), appareil qui comporte un dispositif (3) de blocage de la jante, un bras de montage (12) et un rouleau amont (5), placé en avant du rouleau conique (4), et qui charge le talon de pneumatique considéré, le rouleau conique (4) et le rouleau avant (5) pouvant se déplacer sur le bras de montage (12) par rapport au talon du pneumatique sous l'action d'un chariot (7), caractérisé
en ce que le rouleau conique (4) est arrêté dans le sens inverse du sens de montage au moyen d'un dispositif d'arrêt (30),
en ce que le dispositif d'arrêt (30) est constitué par une roue libre (31),
en ce que la roue libre (31) est disposée entre une portée (32) du rouleau conique (4) et un épaulement (33) d'un axe (34) qui porte le rouleau conique (4), et
en ce que le rouleau conique (4) présente une autre portée (35) destinée à recevoir un roulement à billes (36) qui est placé sur l'axe (34) en avant de la roue libre (31).
